Europäisches Patentamt

European Patent Office

Office européen des brevets

(19)

(11) Publication number: 0 347 769
A1

## (12) EUROPEAN PATENT APPLICATION

(21) Application number: 89110956.3

(22) Date of filing: 16.06.89

(51) Int. Cl.⁴: C08L 27/06 , //(C08L27/06, 33:08)

The title of the invention has been amended (Guidelines for Examination in the EPO, A-III, 7.3).

(30) Priority: 20.06.88 US 208921

(43) Date of publication of application: 27.12.89 Bulletin 89/52

(84) Designated Contracting States: BE DE ES FR GB GR IT NL SE

(71) Applicant: THE B.F. GOODRICH COMPANY
3925 Embassy Parkway
Akron Ohio 44313-1799(US)

(72) Inventor: Horvath, Ladd John
16986 North Meadows Lane
Strongsville Ohio 44136(US)
Inventor: Mikofalvy, Bela Kalman
142 Brunswick Avenue
Avon Lake Ohio 44012(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

(54) Modification of vinyl dispersion resins for improved elasticity.

(57) The elasticity and dynamic moduli of dispersion grade vinyl resins (particularly polyvinyl chloride homopolymers and copolymers derived predominantly from vinyl chloride monomer) are significantly improved by simply blending into a latex of such a vinyl resin a minor proportion of an acrylic rubber latex, the rubbery polymeric solids in which have a glass transition temperature below 0°C. More specifically, said rubber polymeric solids are produced by emulsion polymerization of the following monomers:

    (a) about 80 to about 98 parts by weight of alkyl acrylates averaging at least 2 carbon atoms per alkyl group;

    (b) about 1 to about 10 parts by weight of unsaturated dicarboxylic acids containing between 4 and about 8 carbon atoms; and

    (c) optionally up to 19 weight parts of compatible, additional unsaturated monomers.

The resultant, blended latex can be used per se, but is preferably spray dried to form a modified, fine, plastisol grade vinyl resin powder the primary particles of which are mostly from less than 1 to about 2 microns in size. Fluid plastisols formulated from said spray dried resin offer special advantages for use in forming articles requiring greater elasticity and aesthetic tone("feel") than can be obtained from conventional polyvinyl chloride plastisols.

EP 0 347 769 A1

## MODIFICATION OF VINYL DISPERSION RESINS FOR IMPROVED ELASTICITY AND HAND

This invention is concerned with improvements in the elasticity and aesthetic tone (or "feel") of fine vinyl dispersion (or "paste") resins. These resins are usually made by the emulsion polymerization of vinyl chloride, most often by itself so as to produce homopolymers. However, a minor amount (e.g. less than about 20%) of vinylidene comonomers (such as vinylidene chloride, acrylic acids, amides or esters, monoolefins, vinyl esters or ethers and the like) are sometimes included to produce copolymers which are predominantly made up of vinyl chloride units.

## BACKGROUND OF THE INVENTION

Vinyl dispersion resins can be used in aqueous emulsion (i.e. latex) form, but are more often employed in the form of fluid plastisols. Such plastisols are produced by first spray drying the aqueous emulsion of fine particle vinyl chloride resin obtained from such a controlled polymerization in such a way as to maintain a desirably fine particle size range (usually about 0.5 to about 5 microns) and then dispersing the resultant dried resin particles in a suitable liquid plasticizer. A wide variety of general purpose and specialty plasticizers have been used, with the total proportion in the plastisol typically being within the range from about 50 to 120 parts of plasticizer per 100 parts of resin. The choice of plasticizer(s) and amounts thereof must be adjusted to provide the rheological properties needed in the particular coating or other fluid fabrication process in which the resultant plastisol is to be employed. Other than the various coating processes, major fabrication methods for which plastisols are well suited include dip forming or spraying (using releasable mandrels), rotational molding and other "open" casting techniques.

Although there is some molecular interaction between the vinyl chloride polymer and generally used, compatible plasticizers even at the rather moderate temperatures involved in preparing plastisols, maximum strength is developed in the applied and/or shaped material by heating same to temperatures sufficient to achieve complete mutual solvation of plasticizer and resin, with effective fusion into an integral, solidified polymeric matrix. Temperatures above 300° F are generally employed (e.g. 325°-400° F) in order to provide good cures in reasonable times.

Most finishing plastisol materials are rather soft and fairly flexible, as these properties can be readily obtained by suitable formulation choices, e.g. the grade of resin used and the type and amount of plasticizer combined therewith. Although the softness and flexibility of vinyl plastisol products is impressive considering the inherent stiffness and hardness of traditional rigid vinyl chloride polymers, their elasticity, resiliency and tactile quality are generally marginal, if not actually deficient, for certain potential end-use applications. A good example of such an end-use is the dip forming of hollow, thin-walled items such as disposable gloves for the medical profession. Such gloves prepared from previous vinyl chloride plastisols are notably deficient in elasticity, pliability and aesthetic tactile qualities when compared to premium quality gloves made from natural rubber latex.

## SUMMARY OF THE INVENTION

The chief objective of this invention is to provide simple and practical ways of modifying vinyl dispersion resins to impart better elastic and tactile qualities to finished products made therefrom. We have been able to achieve significant improvements in such qualities by the simple incorporation in a dispersion grade vinyl chloride latex obtained by emulsion polymerization of vinyl chloride monomer alone or in combination with a minor proportion (e.g. up to about 20%) of suitable monosaturated comonomer(s) of a minor amount of an acrylic latex the polymeric particles of which are soft, rubbery inter-polymers. This acrylic latex is produced by emulsion polymerization of about 80 to about 98 weight parts of alkyl acrylates the alkyl groups in which on average have at least 2 carbon atoms with about 1 to about 10 weight parts of unsaturated dicarboxylic acids which contain between 4 and 8 carbon atoms (or anhydrides thereof), and optionally also with up to about 19 parts by weight of compatible additional unsaturated comonomers.

The proportion of said acrylic latex incorporated in said vinyl chloride latex may be varied to provide from about 1 to about 10 weight parts of rubbery interpolymer per 100 parts by weight of the starting vinyl polymer, with the exact proportion depending upon the properties of the individual polymers involved and the particular end-use application for which the modified vinyl dispersion resin is slated. The resulting modified vinyl resin may be applied directly in latex form, or the latex may be spray dried and converted to plastisol form. However, for most plastisol applications, the preferred modification will provide between about 2 and about 6 weight parts of rubbery interpolymer solids incorporated per 100 parts of the starting vinyl chloride resin solids.

## DETAILED DESCRIPTION OF THE INVENTION

As already indicated, the starting vinyl chloride polymers which are modified in accordance with this invention are dispersion grade resins made by emulsion polymerization which yields as product an aqueous emulsion or latex of fine (mostly sub-micron-sized) polymer particles. PVC homopolymers or copolymers containing less than 20 weight percent of monomers other than vinyl chloride and with molecular weights in the usual range of commercial interest are acceptable raw materials. However, for plastisol applications, it is preferred that the other monomers comprise no more than about 10 percent of the vinyl resin by weight and that it have an inherent viscosity between about 0.7 and about 1.4 as measured by ASTM method D-1243-66A. Among the monomers suitable for copolymerization with vinyl chloride are vinylidene chloride, methyl or ethyl acrylate, vinyl acetate, isobutyl vinyl ether and monoolefins such as propylene.

The acrylic latex which serves as the modifier incorporated into the vinyl chloride polymer latex is also an aqueous emulsion of sub-micron-sized polymer particles (preferably less than 0.5 micron). This acrylic latex is a product of the emulsion polymerization of a monomer mixture containing per 100 total parts by weight: (a) about 80 to about 98 parts of alkyl acrylates which contain an average of at least 2 carbon atoms in the alkyl group; (b) from about 1 to about 10 parts of unsaturated dicarboxylic acids containing between 4 and about 8 carbon atoms or their anhydrides; and optionally (c) up to about 19 parts of additional compatible, unsaturated monomers. The optional monomers of (c), which can be used if desired as a supplement or partial substitute for essential monomers (a) and (b) so as to bring the total to 100 parts by weight, can be selected from a wide variety of compatible comonomers provided that the polymer solids of the resulting acrylic latex are soft and rubbery and have a glass transition temperature (Tg) substantially below 0° C. Among the more suitable of these supplemental comonomers are monoolefins; vinyl esters, ethers and ketones; vinyl nitriles and amides; vinyl or vinylidene chloride; vinyl aromatics such as styrene; alkyl methacrylates; acrylic acids and amides; alkyl esters or amides of unsaturated dicarboxylic acids; allyl esters, ethers, etc.; and dienes such as butadiene and isoprene.

As long as the proportions of said monomers, i.e. (a) and (b) and optionally (c), can be balanced as specified above to yield an acrylic latex the polymer solids in which have the desired softness and low Tg (e.g. -5° C or less), there is considerable latitude in the selection of specific monomers of each type. Examples of desirable individual monomers from the alkyl acrylate group (a) are methyl acrylate, ethyl acrylate, propl acrylate, n-butyl acrylate, isobutyl acrylate, n-pentyl acrylate, isoamyl acrylate, n-hexyl acrylate, 2-methyl pentyl acrylate, n-octyl acrylate, 2-ethylhexyl acrylate, n-decyl acrylate, n-dodecyl acrylate, and the like. Mixtures of two or more individual monomers from group (a) can of course, be employed. Most preferred are those containing 4 to about 10 carbon atoms in the alkyl group (e.g. n-butyl, hexyl, 2-ethylhexyl, etc.)

The unsaturated dicarboxylic acids specified as group (b) are also critically essential components. The substitution therefor of monocarboxylic acids (such as acrylic or methacrylic) does not produce the desired balance of properties in the resulting polymer. The unsaturated dicarboxylic acids used in the invention contain 4 to about 8 carbon atoms per molecule. Especially suitable dicarboxylic acids are those containing 4 to 6 carbon atoms such as itaconic acid, citraconic acid, mesaconic acid, glutaconic acid, fumaric acid and maleic acid. The anhydrides of such acids are also usable e.g. maleic anhydride. The more preferred unsaturated dicarboxylic acids are itaconic acid and fumaric acid. The most preferred unsaturated dicarboxylic acid in terms of performance is itaconic acid.

Furthermore, when the 4 to 6 carbon atom dicarboxylic acids like itaconic serve as the (b) group monomers there is usually no need to to employ more than about 8 parts by weight thereof and the optimum charge thereof is about 2 to about 6 parts per 100 parts of total monomers polymerized to make the acrylic latex. Likewise, the optimum proportion of the alkyl acrylate monomers incorporated in said polymerized latex is in the range of about 90 to about 97 parts by weight. In this optimized case, the maximum amount of optional group (c) monomers employed would be restricted to about 8 parts by weight, with the preferred proportion usually being between 0.5 and about 5 parts by weight per 100 parts of total monomers copolymerized.

3

With these preferred proportions, including a maximum of about 5% of the total monomers by weight being chosen from group (c), a soft, low Tg acrylic copolymer product is virtually assured and the choice of specific individual monomers from group (c) is considerably less critical. In fact in addition to those potentially suitable individual monomers already listed herein above for supplemental group (c), certain multifunctional, crosslinking monomers could also be employed in copolymerizing said acrylic latex.

The more preferred crosslinking monomers for incorporation in this manner are monoethylenically unsaturated monomers containing N-methylol groups such as N-methylol acrylamide, or N-methylol derivatives of allyl carbamate which may contain one or two N-methylol groups. The N-methylol groups may be left unreacted or they may be etherized, as with $C_1$ to $C_4$ carbon alcohols. The alcohol is released on curing to regenerate the N-methylol group for cure. Alcohol etherifying agents are illustrated by methyl alcohol, ethyl alcohol, isopropyl alcohol, isobutyl alcohol, 2-ethoxyethanol, and 2-butoxy ethanol.

More particularly, the preferred crosslinking monomers are selected from N-alkylol acrylamides that contain from about 4 to about 18, preferably 4 to 12 carbon atoms in the alkyl group, and alkyl acrylamidoglycolate lower alkyl ethers containing from about 7 to about 20 carbon atoms. Specific examples of the particularly preferred crosslinking monomers include N-methylol acrylamide, N-methylol methacrylamide, N-butoxymethyl acrylamide, isobutoxymethyl acrylamide and methyl acrylamidoglycolate methyl ether. Especially good results have been obtained using N-methylol acrylamide as the crosslinking monomers in amounts of about 0.5 to 2.5 parts by weight per 100 parts of total monomers combined.

Accordingly, exemplary highly preferred acrylic latex for use in this invention is produced by copolymerizing in an aqueous emulsion about 90 to 97 weights parts of an alkyl acrylate such as n-butyl acrylate with about 2 to 6 weight parts of an unsaturated dicarboxylic acid such as itaconic and about 0.5 to 2.5 weight parts of a crosslinking monomer such as N-methylol acrylamide. When traditional emulsifiers are used to prepare the acrylic latexes of this invention, the standard types of anionic and nonionic emulsifiers can be employed. Useful emulsifiers include alkali metal or ammonium salts of the sulfates of alcohols having from 8 to 18 carbon atoms such as sodium lauryl sulfate, ethanolamine lauryl sulfate, and ethylamine lauryl sulfate; alkali metal and ammonium salts of sulfonated petroleum and paraffin oils; sodium salts of sulfonic acids such as dodecane-1-sulfonic acid and octadiene-1-sulfonic acid; aralkyl sulfonates such as sodium isopropyl benzene sulfonate, sodium dodecyl benzene sulfonate and sodium isobutyl naphthalene sulfonate; alkali metal and ammonium salts of sulfonated dicarboxylic acid esters such as sodium dioctyl sulfosuccinate and disodium-N-octadecyl sulfosuccinate; alkali metal or ammonium salts of the free acid of complex organic mono- and diphosphate esters; copolymerizable surfactants such as vinyl sulfonate and the like. Nonionic emulsifiers such as octyl- or nonylphenyl polyethoxyethanol may also be used. Latexes of the invention having excellent stability are obtained using the alkali metal and ammonium salts of aromatic sulfonic acids, aralkyl sulfonates, long chain alkyl sulfonates and poly(oxyalkylene) sulfonates as emulsifiers.

The polymerization of the monomers may be conducted at temperatures from about 0°C up to about 100°C in the presence of a compound capable of initiating the polymerizations. Initiating compounds and mixtures thereof are chosen, often in conjunction with oxidation-reduction catalysts, in an amount and type which results in a suitable initiation rate at a chosen polymerization temperature profile. Commonly used initiators include the free radical initiators like the various peroxygen compounds such as persulfates, benzoyl peroxide, t-butyl diperphthalate, perlargonyl peroxide and 1-hydroxycyclohexyl hydroperoxide; azo compounds such as azodiisobutyronitrile. Particularly useful initiators are the water-soluble peroxygen compounds such as hydrogen peroxide and sodium, potassium and ammonium persulfates used by themselves or in activated systems. Typical oxidation-reduction systems include alkali metal persulfates in combination with a reducing substance such as polyhydroxyphenols, oxidizable sulfur compounds such as sodium sulfite or sodium bisulfite, reducing sugars, dimethylamino propionitrile, diazomercapto compounds, water-soluble ferricyanide compounds, or the like. Heavy metal ions may also be used to activate persulfate catalyzed polymerizations.

The amount of surfactant used is from about 0.01 to about 10 parts by weight, and the amount of initiator used is from about 0.01 to about 1.5 parts by weight, both based on 100 weight parts of the total monomers. Acrylic latexes with good stability can be prepared in this manner for use in the present invention. They are usually anionically stabilized, have a pH of from about 1 to about 6 as prepared and have a particle size in the range of about 0.1 to about 0.5 micron. The solids content of the finished latex may vary from as little as 25% up to about 64% by weight, but preferably is targeted at between about 40% and 60%.

The dispersion grade vinyl chloride polymer latexes which are treated in accordance with this invention generally contain similar concentrations of approximately micron-sized polymeric particles. The modifying treatment thereof is readily carried out by simply blending a proportioned, minor amount of said acrylic polymer latex into the starting vinyl resin latex under conditions amenable to maintaining latex stability.

Such conditions are generally familiar to those skilled in the art and include avoidance of incompatible pH's, emulsifying agents or the imposition of extreme forces or temperatures.

As already indicated, the two latexes should be blended in proportions providing about 1 to about 10 (preferably between about 2 and about 6) weight parts of the soft rubbery, acrylic interpolymer per 100 parts of the starting vinyl chloride resin. For example, if the acrylic latex contains 40% by weight of soft, rubbery interpolymer and the vinyl latex contains 50% by weight of vinyl chloride polymer, blending 10 parts by weight of said acrylic latex with 100 parts by weight of said vinyl latex would provide 8 parts of rubbery acrylic copolymer per 100 parts by weight of the starting vinyl chloride resin.

The resultant modified vinyl chloride latex has utility per se as a coating, binder and/or impregnant for various fibrous or particulate materials, e.g. impregnating paper or in preparing fiber matting or non-woven batts However, the practical benefits of the subject invention are more fully realized when the modified vinyl resins are applied in plastisol form.

After the modifying acrylic latex has been uniformly blended into the starting vinyl chloride latex, the resultant modified latex can be converted to a "plastisol-quality" powder using the same spray drying equipment and techniques by means of which conventional vinyl resins have traditionally been produced as fine dry powders which are readily dispersible to form high quality plastisols. Because of the excellent atomizing devices provided in such equipment, the polymeric latexes can be injected as a uniform spray of fine droplets into the central region of a drying chamber supplied with circulating hot drying gases. Since the time required to evaporate water from the fine droplets is normally only a few seconds using inlet gas heated moderately above $100°C$ (e.g. to about $110°-140°C$), neither extensive agglomeration nor thermal degradation of the individual polymer particles occurs.

Accordingly, little or no change in standard spray drying equipment or operating conditions is necessary in order to convert the modified vinyl resin latex of this invention to the desired spray dried powder form. These spray dried powders, which range from less than one micron to a few microns in particle size, can be used with advantage in certain powder coating applications where improved flexibility is desired.

Likewise, no significant changes are required in the usual mixing procedures recommended for preparing conventional plastisols in order to disperse the modified spray dried powders of this invention into suitable liquid plasticizers, along with other compounding adjuvants appropriate for the particular plastisol application anticipated. When the proportion of plasticizers is above about 60 parts by weight per 100 parts of vinyl resin, a minor part of the plasticizer liquids (e.g. about 10 to 25% of the total liquids) is reserved for the late addition toward the end of the mixing operation. The remaining major part (e.g. 75 to 90%) of the liquid is charged initially into the mixing chamber of a suitable apparatus. Heavy duty mixers such as the sigma-blade trough mixers can be used, but streamlined mixers, equipped with high shear dispersing impellers (e.g. the Day-Nauta or Hobart mixers) are generally preferred today. Solid ingredients are introduced gradually to the initial liquid charge with the agitator element(s) running, the rate of addition being adjusted to avoid build up of a layer of floating powder and to assure prompt wetting out and thorough dispersion thereof. Temperatures are controlled within a range of about $75°$ to about $100°$ F. If the mixer is not equipped with cooling jacket, addition of some of the reserved liquid can help to control temperature. After a smooth paste is achieved, the final charge of reserved liquids can be introduced, while mixing time is extended sufficiently to achieve homogeneity and the rheological state desired in the finished plastisol. If the plastisol is to be used promptly for other than formation of a foamed material, a deaeration step is generally added.

The primary liquid plasticizers used in preparing fluid plastisols from dispersion grade vinyl resins are organic esters of various acids such as phthalic, phosphoric, adipic, sebacic and the like. Of these, the phthalate esters are most frequently used as principal plasticizers for dispersion type vinyl chloride resins. Dialkyl phthalates containing medium length alkyl groups (e.g. from about 6 to about 12 carbon atoms in length) provide a good balance of plastisol properties when used in proportions from about 40 to about 120 parts by weight per 100 parts of the spray dried vinyl chlroide resin powder.

Depending upon the end-use application intended, various additional ingredients may be included in such plastisols in minor amounts. For example, a few parts of specialty plasticizers such as epoxidized soya oil are often used along with similar proportions of heat stabilizers, such as metallic soaps, to provide resistance to thermal degradation. Other optional adjuvants that may be included in some situations include lubricants, pigments, dyes, dispersants, surfactants and various other viscosity regulators including volatile diluents, extenders and viscosity stabilizers.

The spray dried, acrylic resin-modified, vinyl chloride resin powder of this invention can be formulated using about 60 to about 100 parts of suitable primary liquid plasticizers (such as the aforementioned dialkyl phthalates) per 100 parts by weight of resin into satisfactory plastisols for various coating processes. The resultant plastisols tend to be somewhat more viscous than directly comparable formulations which are made using the corresponding unmodified spray dried vinyl chloride powder. However, the finished coatings or shaped articles produced from the modified vinyl resin plastisols of this invention exhibit better elasticity and feel less stiff than those made from unmodified vinyl resin plastisol when temperatures of about 325° C to about 400° F are used in each case to fuse the compositions into a finished homogeneous solid matrix.

The advantages of the present invention are especially valuable in plastisol applications involving fabrication of hollow, thin-walled articles such as sanitary, disposable gloves by dip forming or mandrel casting techniques. The improved flexibility and the softer, more pleasing "hand" (or feel) imparted to such gloves by using the modified vinyl chloride resins of this invention in the plastisol composition of the dipping bath instead of the conventional dispersion grade vinyl chloride resins are qualities that can be readily detected and appreciated by experienced users, e.g. anyone familiar with the major aesthetic differences between disposable (PVC) plastic gloves and high quality rubber (natural latex) gloves.

The following, non-limiting examples further illustrate the invention and some of the advantageous results and benefits obtainable in the practice thereof. In these examples, amounts of ingredients are given in parts "by weight" unless otherwise stated.

## EXAMPLE 1

### Preparations of Modified Vinyl Resins

A monomer mixture of 95 parts of n-butyl acrylate to 3 parts of itaconic acid and 2 parts of N-methylol acrylamide was emulsion polymerized in an aqueous medium at a controlled temperature of about 80° C to produce a stable acrylic rubber latex containing about 40% by weight of copolymeric particles averaging about 0.3 micron in size.

Four parts of said acrylic latex was blended into 100 parts of emulsion polymerized vinyl chloride latex containing about 52% by weight of homopolymeric particles averaging about 0.7 microns in size and having an inherent viscosity of about 1.2. The resultant modified vinyl chloride latex yields more resilient coatings and impregnated fibrous sheet materials than the original, unmodified vinyl chloride when applied via the same process or technique.

## EXAMPLE 2

### Preparation of Fluid Plastisol Composition

,The modified vinyl chloride latex of Example 1 was successfully spray dried using standard equipment and procedures, including regulating the inlet gas temperature at about 125° to 130° C. Latex atomization was very satisfactory with the average size of the primary particles in the finished powder very close to the normal target of 1 micron.

A simple basic fluid plastisol formulation was prepared using said modified spray dried resin in the following recipe:

| 100 | parts | PVC resin powder |
|---|---|---|
| 100 | parts | Phthalate ester plasticizer |
| 5 | parts | Epoxidized soya oil |
| 5 | parts | SYNPRON*231 liquid/zinc heat stabilizer |

*Trade Mark of Synthetic Products Co., Cleveland, OH

An experimental batch of the above plastisol resin was mixed according to standard laboratory procedure (as previously outlined herein) and using as the phthalate plasticizer ingredient a mixed, $C_7$ to

$C_{11}$ dialkyl ester sold under the trade name Palatinol 711-P by BASF Corp. of Parsippany, NJ. The resultant plastisol was somewhat higher in viscosity than a comparable batch made using approximately 1 micron dispersion resin made by spray drying the original unmodified vinyl chloride latex. However, it was equally smooth and sufficiently free flowing for use in most fluid plastisol applications.

## EXAMPLE 3

### Testing of Mechanical Properties of Fused Plastisols

The experimental plastisol of Example 2 and a corresponding reference plastisol of the same formulation except for the use of the original unmodified vinyl resin powder were cast into cylindrical molds about 1 inch in diameter and heated at 350° F for 10 minutes to form fused, solid disk specimens about 0.18 inch in thickness.

The dynamic viscoelastic properties of said specimens were determined using a Mechanical Spectrometer, made by Rheometrics, Inc. of Union, NJ. This instrument was equipped with a clamping fixture having parallel plates 25mm in diameter for applying forced constant, amplitude-fixed torsional oscillation to said cylindrical disk-shaped specimens. Two sequential frequency scans were performed for each specimen over a frequency range from $10^{-2}$ to $10^2$ radians/sec; the first scan being performed at an amplitude providing a dynamic strain of about 0.3% while the second produced a strain of 12%.

The principal parameters measured were the shear storage modulus $G'$ and the shear loss modulus $G''$. Tan delta (tan $\delta$), the loss tangent, is also reported at various frequencies, since it is equal to the ratio of $G''/G'$. The averaged data for both frequency scans are reported in Table 1, where Sample S designates the formulation containing the original unmodified, conventional vinyl resin powder and Sample M designates the equivalent formulation using the experimental, modified, spray dried resin powder of Example 2.

TABLE 1

| Oscillatory Frequency (rads/sec) | Sample S | | | Sample M | | |
|---|---|---|---|---|---|---|
| | $G'$ (Bars) | $G''$ (Bars) | Tan $\delta$ ($G''/G'$) | $G'$ (Bars) | $G''$ (Bars) | Tan $\delta$ ($G''/G'$) |
| $10^{-2}$ | 6.0 | 0.56 | 0.093 | 5.0 | 0.23 | 0.046 |
| $10^{-1}$ | 6.6 | 0.47 | 0.071 | 5.4 | 0.33 | 0.061 |
| $10^0$ | 7.2 | 0.5 | 0.069 | 6.0 | 0.37 | 0.062 |
| $10^1$ | 7.9 | 0.73 | 0.092 | 6.5 | 0.55 | 0.085 |
| $10^2$ | 9.0 | 1.56 | 0.173 | 7.5 | 1.19 | 0.159 |

Comparing first the shear storage modulus ($G'$) measurements in Table 1, it is seen that Sample M is consistently lower in this parameter than Sample S, with the $G'$ values for M running about 82 to 83% of the corresponding $G'$ values for S at a given frequency. This shows that Sample M is significantly less stiff than Sample S. In addition, the shear loss modulus ($G''$) values for Sample M are lower than the comparable $G''$ figures for Sample S by an even greater margin, running about 70 to 75% as great over the frequency range from $10^{-1}$ to $10^2$. This clearly shows that the specimens of M undergo much lower hysteresis losses under dynamic strain than the Sample S material. In other words, the modified plastisols of this invention when shaped and fused, produce finished materials with improved dynamic elasticity as well as a springier, more lively feel when handled. Finally, comparing the Tan $\delta$ (or $G''/G'$) parameters in Table 1, Sample M values are again consistently lower than those for Sample S at any given frequency, running between about 86 and 92% thereof over the range from $10^{-1}$ to $10^2$. These lower Tan $\delta$ values indicate that the overall dynamic viscoelastic behavior of the modified compositions of this invention is also very well balanced.

The same type of mechanical tests were performed on similar specimens made from the plastisol formulations specified in Example 2, except that the amount of liquid phthalate ester plasticizer was reduced from 100 to 80 parts. The results showed the same primary trend in that the $G'$ (shear storage modulus) values for the specimens made from plastisol containing the modified vinyl chloride resin powder were consistently lower at any given frequency than those made with the original unmodified vinyl chloride powder, with the former specimens showing $G'$ values of around 85 to 86% of those of the latter.

## EXAMPLE 4

### Preparation of Thin-Walled Disposable Gloves

A large batch of experimental plastisol having the basic formulation shown in Example 2 was made for use as a dipping bath for forming disposable gloves on a strippable mandrel. After adjusting the viscosity of the plastisol to about 1200 centipoises at room temperature, the mandrel was immersed to the desired depth in the plastisol bath, then gently withdrawn vertically so as to uniformly coat the desired mandrel area with a thin film of fluid plastisol. After allowing excess plastisol to drain off for up to a few seconds, the coated mandrel is transferred to an oven heated to about 350° to 400° F. After fusion of the plastisol film is complete (e.g. within about 3 to 6 minutes), the coated mandrel is removed. When cooled down to about room temperature, the finished gloves are stripped from the mandrel.

The finished gloves were then compared for stretchiness and feel with gloves of similar thickness made from a commercial plastisol dipping formulation similar in composition and viscosity to the experimental plastisol of this example. Based upon this subjective comparison and general aesthetic considerations, the gloves made from said experimental plastisol appeared to be clearly superior in elasticity, wearing comfort and feel to the commercially made gloves. Furthermore, this apparent superiority was confirmed by a blind, head-to-head, comparison test of said respective gloves among a panel of 26 persons. Each panelist (individually) was given one glove of each type (identified only by code markings) to study and try on, then asked to answer two questions as follows: (1) Which glove do you prefer? and (2) Why? Analysis of the replies showed that 25 out of the 26 panelists chose the glove made from the experimental plastisol of this invention, with the reasons most frequently cited being: "feels silkier", "more rubbery" and "more comfortable to wear".

Among the specific primaryliquid plasticizers that can be used in place of all or part of Palatinol 711-P™ in Examples 2, 3 and 4, special mention is herewith made of didecyl phthalate, dioctyl adipate and diundecyl phthalate.

While the present invention has been described in conjunction with certain specific embodiments, many additional modifications and variations will be made evident to those skilled in the art by the teachings contained herein. Accordingly, it is intended that all such modifications and variations which fall within the spirit and scope of said teachings will be covered by the claims appended hereto.

## Claims

1. A stable, mixed latex comprised predominantly of an emulsion polymerized vinyl chloride polymer latex at least 80% by weight of the polymeric solids in which are derived from vinyl chloride monomer and, blended therewith, a minor proportion of an acrylic rubber latex the rubbery polymeric solids in which are produced by emulsion polymerization of the following monomers:

(a) about 80 to about 98 weight parts of alkyl acrylates averaging at least 2 carbon atoms in the alkyl group;

(b) about 1 to about 10 weight parts of unsaturated dicarboxylic acids which contain between 4 and about 8 carbon atoms; and

(c) optionally up to 19 weight parts of compatible, additional unsaturated monomers.

2. A stable, mixed latex as in claim1 wherein the proportion of said acrylic latex is sufficient to provide from about 1 to about 10 parts of said rubbery polymeric solids per 100 parts by weight of the vinyl chloride polymeric solids.

3. A stable, mixed latex as in claim 2 wherein said vinyl chloride polymeric solids contain less than about 10% of monomers other than vinyl chloride and said rubbery polymeric solids have a glass transition temperature substantially below 0°C.

4. A stable, mixed latex as in claim 3 wherein the vinyl chloride polymer is a homopolymer and the rubbery polymeric solids are produced from:

(a) about 90 to about 97 weight parts of said alkyl acrylates;

(b) about 2 to about 6 weight parts of unsaturated dicarboxylic acids which contain from 4 to 6 carbon atoms; and

(c) optionally up to about 8 weight parts of compatible additional unsaturated monomers.

5. A stable, mixed latex as in claim 4 wherein between about 0.5 and about 5 weight parts of the optional additional unsaturated monomers of group (c) are copolymerized along with the specified group (a) and group (b) monomers in producing said rubbery polymeric solids.

6. A stable, mixed latex as in claim 5 wherein at least one multi-functional crosslinking monomer is used to make up at least part of said specified portion of group (c) monomers.

7. A stable, mixed latex as in claim 6 wherein n-butyl acrylate makes up substantially all of the alkyl acrylates of monomer group (a); itaconic acid is the predominant unsaturated dicarboxylic acid of group (b); and N-methylol acrylamide is a major component in the additional unsaturated monomers of group (c).

8. A process for making a modified dispersion grade vinyl chloride resin powder which comprises spray drying in a hot gas a stable latex mixture consisting essentially of (1) a predominant proportion of an emulsion polymerized vinyl chloride polymer latex at least 90% of the polymer solids in which are derived from vinyl chloride monomer and (2) a minor proportion of an acrylic rubber latex sufficient to provide from about 1 to about 10 parts by weight of the rubbery polymeric solids in said acrylic rubber latex per 100 parts of the polymer solids in said vinyl chloride polymer latex, said rubbery polymeric solids being derived from the following monomers:

(a) about 80 to about 98 weight parts of alkyl acrylates averaging at least 2 carbon atoms in the alkyl group;

(b) about 1 to about 20 weight parts of unsaturated dicarboxylic acids which contain between 4 and about 8 carbon atoms; and

(c) optionally up to 19 weight parts of compatible, additional unsaturated monomers.

9. A process as in claim 8 wherein the polymersolids in said vinyl chloride latex have an inherent viscosity between about 0.7 and 1.4 as measured by ASTM method D-1243-66A and the rubbery polymeric solids in said acrylic latex have a glass transition temperature substantially below 0°C.

10. A process as in claim 9 wherein the solid particles in both the vinyl latex and the acrylic latex are predominantly of sub-micron size and the proportions in which they are combined provides about 2 to about 6 parts by weight of the rubbery polymeric solids in said acrylic latex per 100 parts of the polymer solids in said vinyl latex.

11. A process as in claim 9 wherein the vinyl chloride polymer is a homopolymer and said rubbery polymeric solids are produced from:

(a) about 90 to about 97 weight parts of said alkyl acrylates;

(b) about 2 to about 6 weight parts of unsaturated dicarboxylic acids which contain from 4 to 6 carbon atoms; and

(c) optionally up to about 8 weight parts of compatible additional unsaturated monomers.

12. A process as in claim 11 wherein the amount of additional unsaturated monomers from group (c) is between about 0.5 and about 5 parts by weight.

13. A process as in claim 12 wherein the inlet temperature of the heated gas used in spray drying said stable latex mixture is not substantially above 140°C.

14. A process as in claim 13 wherein n-butyl acrylate makes up substantially all of the alkyl acrylates of monomer group (a); itaconic acid is the predominant unsaturated dicarboxylic acid of group (b); and between about 0.5 and about 2.5 parts by weight of N-methylol acrylamide is included in the additional unsaturated monomer group (c).

15. A spray dried, modified, dispersion grade vinyl chloride resin powder having an average primary particle size of approximately a micron, said powder particles consisting essentially of a predominant proportion of vinyl chloride polymer at least 90% of which by weight is derived from vinyl chloride monomer and in intimate admixture therewith from about 2 to about 6 parts per 100 parts by weight of said vinyl chloride polymer of a rubbery, acrylic interpolymer produced from the following monomers:

9

(a) about 90 to about 97 weight parts of said alkyl acrylates;

(b) about 2 to about 6 weight parts of unsaturated dicarboxylic acids which contain from 4 to 6 carbon atoms; and

(c) optionally up to about 8 weight parts of compatible additional unsaturated monomers.

16. A vinyl chloride resin powder as in claim 15 wherein the amount of group (c) monomers is between about 0.5 and about 5 parts by weight and at least one multifunctional crosslinking monomer makes up at least part of said group (c) monomers.

17. A vinyl chloride resin powder as in claim 16 wherein n-butyl acrylate makes up substantially all of the alkyl acrylates in monomer group (a); itaconic acid is the predominant unsaturated dicarboxylic acid of group (b); and 0.5 to about 2.5 parts by weight of N-methylol acrylamide is included as at least part of said multifunctional crosslinking monomer.

18. A vinyl chloride resin powder as in claim 17 wherein said vinyl chloride polymer is essentially a homopolymer of vinyl chloride.

19. A modified polyvinyl chloride plastisol composition comprising a homogeneous dispersion of the spray dried, modified, dispersion grade vinyl chloride resin powder of claim 15 in compatible, liquid, organic ester plasticizers.

20. A plastisol composition as in claim 19 wherein about 60 to about 120 parts of said liquid plasticizers are present per 100 parts of solid resin powders dispersed therein.

21. A plastisol composition as in claim 20 wherein the spray dried, modified, dispersion grade vinyl chloride resin powder of claim 15 makes up substantially all of the solid resin powder in said composition and said liquid plasticizers are predominantly organic esters of polybasic acids, such as phthalic, phosphoric, adipic and sebacic acids.

22. A modified polyvinyl chloride plastisol composition comprising a homogeneous dispersion of the spray dried, modified, dispersion grade vinyl chloride resin powder of claim 17 in compatible liquid plasticizers which are predominantly made up of dialkyl phthalate esters containing medium length alkyl groups.

23. A modified plastisol composition as in claim 22 where about 60 to about 120 parts of said liquid plasticizers are present per 100 parts by weight of solid resin powders dispersed therein.

24. A plastisol composition as in claim 23 wherein said spray dried, modified dispersion grade vinyl chloride resin powder makes up substantially all of the solid resin powder in said composition and the alkyl groups in said dialkyl phthalate esters predominantly contained between 6 and 12 carbon atoms.

25. A plastisol composition as in claim 24 wherein at least 80 parts of said dialkyl phthalate esters are present per 100 parts by weight of said spray dried, modified dispersion grade vinyl chloride resin powder.

26. A plastisol composition as in claim 25 having a viscosity not substantially above 2000 centipoises as measured at room temperature with a Brookfield Viscosimeter operated at a spindle speed of 2 rpm.

27. A hollow, thin-walled article, such as a glove, formed from a plastisol composition as described in claim 26.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-1 801 005 (B.F. GOODRICH CO.) <br> * Page 20, lines 26-30 * <br> --- | 1,8 | C 08 L 27/06 // <br> (C 08 L 27/06 <br> C 08 L 33:08 ) |
| A | US-A-3 616 166 (KELLEY) <br> * Claims 1,2; table II, example 2 * <br> ----- | 1 | |

TECHNICAL FIELDS SEARCHED (Int. Cl.4)

C 08 L
C 08 J
A 61 B
C 09 D
C 09 J

The present search report has been drawn up for all claims

| Place of search | Date of completion of the search | Examiner |
|---|---|---|
| THE HAGUE | 12-09-1989 | SCHUELER D.H.H. |

EPO FORM 1503 03.82 (P0401)